# FASCICULE DE BREVET EUROPEEN

(11) **EP 4 423 376 B1**
(45) Date de publication et mention de la délivrance du brevet: **03.12.2025**
(21) Numéro de dépôt: 22801865.1
(22) Date de dépôt: 19.10.2022
(51) Int. Cl.: F02C 7/04, F02K 3/06, G01P 5/14, G01P 13/02

(54) **DÉTECTION D'UN VENT DE TRAVERS SUR UNE TURBOMACHINE À PARTIR DES DONNÉES DU MOTEUR**
ERKENNUNG EINES SEITENWINDS AUF EINER TURBOMASCHINE AUS MOTORDATEN
DETECTION OF A CROSSWIND ON A TURBOMACHINE FROM ENGINE DATA

(30) Priorité: 27.10.2021 FR 2111407
(43) Date de publication de la demande: 04.09.2024
(73) Titulaire: SAFRAN AIRCRAFT ENGINES, 75015 Paris (FR)
(72) Inventeur: GARNIER, Alméric, 77550 MOISSY-CRAMAYEL (FR)
(74) Mandataire: Cabinet Beau de Loménie
(86) Numéro de dépôt international: PCT/FR2022/051970
(87) Numéro de publication internationale: WO 2023/073306

(56) Documents cités:
- EP-B1- 2 895 703
- US-A- 5 797 105
- US-B1- 6 253 126

## Description

### Domaine Technique

L'invention concerne le domaine de la surveillance d'une turbomachine d'un aéronef, et plus particulièrement la détection d'un vent de travers, notamment pour l'assistance à la maintenance aéronautique.

### Technique antérieure

On constate aujourd'hui une mise en place systématique de services de maintenance prédictive. De cette manière, les fabricants de moteurs cherchent à anticiper au mieux des défaillances susceptibles d'affecter des moteurs équipant des aéronefs. La mise en place de ces services s'est en outre accélérée depuis l'arrivée sur le marché de l'aviation civile de contrats à l'heure de vol.

Ces services de maintenance prédictive reposent de manière essentielle sur des mesures acquises au cours d'une ou plusieurs missions de vol des aéronefs, et qui sont représentatives non seulement du comportement d'un moteur, mais également du contexte d'acquisition rencontré par ce moteur au cours. Plus particulièrement, des besoins logistiques et matériels utiles à la réalisation des services de maintenance sont proposés à partir d'une analyse desdites mesures.

A titre d'exemple, les mesures représentatives du comportement du moteur peuvent concerner différentes variables, comme une vitesse de rotation d'un arbre de turbine, une pression et / ou une température et / ou un niveau d'huile dans un circuit d'huile, un débit de carburant, une température de gaz d'échappement, etc. Les mesures représentatives du contexte d'acquisition peuvent quant à elles concerner d'autres variables, comme par exemple la météo, le pilotage, le vieillissement du moteur, le poids de l'avion, etc.

De manière conventionnelle, lesdites mesures sont acquises par des moyens d'acquisition embarqués dans un aéronef, et mises à disposition d'un dispositif récepteur au sol en possession de l'avionneur, afin d'être analysées. Cette mise à disposition s'effectue soit lors de la mission de vol, typiquement par transmission via une liaison satellite, soit après l'atterrissage par un déchargement d'une mémoire dans laquelle ont été mémorisées lesdites mesures.

Il est connu par exemple du document WO 2020/201652 un procédé de surveillance d'un moteur sur la base d'au moins deux mesures, l'une étant normalisée par rapport à l'autre, et la surveillance consistant en la détection d'une anomalie sur une dérive anormale de l'indicateur normalisé.

Il est également connu du document FR 2 097 897 un procédé de démarrage d'une turbomachine en présence d'un vent arrière basé sur la surveillance d'une turbomachine à partir d'un ensemble d'information.

Or, en l'absence de remontée d'informations de l'avionique (système avion comme une sonde Pitot) et/ou des stations météorologiques au sol, il n'est pas connu de méthode pour déterminer si un moteur d'un aéronef a expérimenté un vent de travers sur la base des données satellites, telles que les données « ACARS », ou sur la base des données issues du moteur, telles que les données « Continues » (pour « Continuous Engine Operational Data » en anglais) au sol, et encore moins en vol. L'absence de ces données peut être liées à :
- des pannes du système avionique, par exemple liées à un problème technique empêchant les systèmes embarqués de mesures, acquisition, traitement, enregistrement de la cellule avions, soit de communiquer vers les systèmes sols de l'avionneur, de la compagnie aérienne et/ou d'un équipementier d'origine, ou « Original Equipement Manufacturer » (OEM) en anglais, tels qu'un motoriste d'aéronefs, soit, indépendamment des accords de la compagnie aérienne ou de l'avionneur, de transmettre les données (elles ne sont pas récupérées du fait d'une panne technique du système de récupération/transmission à bord de l'avion : calculateur, système de transmission, dispositif de mémorisation des données),
- un blocage de l'accès aux données avioniques (interdiction à l'OEM d'accéder à ces données - décision de la compagnie aérienne), lié par exemple à un problème de gouvernance des données, ou une indisponibilité des données avioniques (l'avion a pu émettre les données et elles sont stockées, et à disposition de l'OEM, mais l'OEM n'arrive pas à les récupérer pour des problèmes techniques du système de récupération des données au sol : par exemple les systèmes d'information de l'OEM ou implémentés à bord de l'avion (système de la compagnie aérienne) n'arrivent pas à communiquer ou ne sont pas assez performants).
- un blocage d'accès aux données sols (capteurs de pression au sol, radars, et tout système au sol du périmètre de l'aéroport, de station météorologique, étatique, etc.) ou une non pertinence (pour déterminer quelle est la situation courante de l'aéronef en vol).

Or, la connaissance de l'expérience de vent de travers permet de guider la régulation d'un moteur (au démarrage notamment), mais également d'améliorer les modèles d'endommagement (contraintes physiques asymétriques sur un aubage, un arbre) d'une turbomachine ou encore de normaliser d'autres surveillances sensibles à ce phénomène aérodynamique.

Aussi bien pour des conditions de roulage que pour des conditions en vol d'un aéronef, il existe un besoin de détecter la présence éventuelle et la direction d'un vent de travers agissant sur des moteurs d'aéronefs sur la base des données moteurs, en l'absence de données issues de station sol, ou de données de l'avionique. L'arrière-plan technique comprend notamment le document US6253126.

### Exposé de l'invention

L'invention vise à fournir une solution pour détecter des conditions de vent de travers pour des turbomachines d'un aéronef en l'absence de données issues de station au sol ou de données satellitaires ou de données de l'avionique.

Un objet de l'invention propose un procédé de détection de la présence d'un vent de travers pour une turbomachine d'un aéronef, l'aéronef comportant au moins deux turbomachines disposées de part et d'autre d'un axe principal de l'aéronef s'étendant entre un nez de l'aéronef et une queue de l'aéronef, lesdites turbomachines comportant chacune un arbre basse pression et un ensemble d'au moins trois capteurs de régulation du fonctionnement de la turbomachine, un premier capteur de l'ensemble étant configuré pour mesurer le régime de l'arbre basse pression, un deuxième capteur de l'ensemble étant configuré pour mesurer une première pression ou température à une première localisation sur la turbomachine, et un troisième capteur de l'ensemble étant configuré pour mesurer une seconde pression ou température à une seconde localisation sur la turbomachine.

Selon une caractéristique générale de l'invention, le procédé comprend les étapes suivantes :
- pour chaque turbomachine, une acquisition (E0) des données de l'ensemble d'au moins trois capteurs,
- pour chaque turbomachine, une normalisation (E1) de ladite première pression ou température par rapport au régime de l'arbre basse pression et à la seconde pression ou température,
- une comparaison (E2) de la première pression ou température normalisée d'une turbomachine à la première pression ou température normalisée de ladite au moins une autre turbomachine de l'aéronef,
- une détection (E3+E4) de la présence d'un vent de travers à partir du résultat de la comparaison.

L'étape de normalisation de la première pression ou température permet de rendre comparable les premières pressions de chaque turbomachine de l'aéronef.

Pour chaque turbomachine, le premier capteur de pression ou de température configuré pour mesurer la première pression ou température est disposée d'un même côté de la turbomachine, car les turbomachines sont généralement fabriquées en série sans distinction de positionnement droite / gauche. Or, l'axe des turbomachines autour duquel les éléments mobiles sont en rotation est dirigé selon une même direction qui correspond à l'axe principal de l'aéronef. Par conséquent, les turbomachines d'un même aéronef devraient subir la même perturbation aérodynamique liée à leur nacelle respective. Donc, en théorie, on ne devrait pas distinguer de différence de valeur entre les premières pressions ou températures mesurées sur les turbomachines d'un même aéronef.

Cependant, il existe un phénomène de masquage aérodynamique aussi connu sous la dénomination anglaise de « Dutch Roll ». La dynamique du Dutch Roll est connue et témoigne de la stabilité naturelle (par design) d'un avion. Le phénomène s'amorce et s'entretien par les masquages aérodynamiques successifs d'une aile par le fuselage du corps de l'avion lorsque ce dernier entame un lacet.

Plus explicitement, dans un premier temps, l'avion amorce un lacet droit. L'aile droite se retrouve masquée par le corps de l'avion. L'aile masquée subie une perte de vitesse du vent relatif, ça portance chute comparativement à l'aile gauche, qui subit le phénomène inverse : un moment s'installe sur l'axe de l'avion et le roulis s'amorce vers la droite. L'aile gauche s'élève, sa traînée augmente (sa portance en moindre mesure), ce qui introduit un moment sur l'axe de la gouverne, l'avion entame alors un lacet gauche. Le masquage s'atténue, l'aile droite retrouve sa portance et l'avion entame un roulis gauche. Et ainsi de suite.

Le masquage aérodynamique, ou « Dutch Roll », généré par le corps de l'avion et subit par l'une ou l'autre des turbomachines introduit une différence dans les valeurs des premières pressions ou températures mesurées pour les turbomachines d'un même aéronef. Cette différence de valeur est déterminée à l'étape de comparaison et permet de fournir une indication sur une présence d'un vent de travers.

Selon un premier aspect du procédé de détection d'un vent arrière, le procédé peut comprendre en outre une détermination de la direction azimutale du vent de travers détecté à partir du résultat de la comparaison.

Selon un deuxième aspect du procédé de détection d'un vent arrière, le procédé peut comprendre en outre une détermination de la vitesse du vent de travers détecté.

Selon un troisième aspect du procédé de détection d'un vent arrière, l'étape de détection est réalisée à partir d'un résultat moyenné de l'étape de comparaison, le résultat moyenné étant obtenu à partir d'une comparaison d'une moyenne de première pression ou température normalisée à une moyenne de première pression ou température normalisée de ladite au moins une autre turbomachine de l'aéronef, les moyennes étant réalisée à partir des mesures acquises pendant une même fenêtre temporelle, ou bien à partir d'une moyenne des comparaisons réalisées à partir des résultats des comparaisons déterminées pendant une fenêtre temporelle. La moyenne des mesures ou la moyenne des comparaisons peut être réalisée sur une période d'acquisition de 30 s par exemple pour avoir environ 1200 mesures. La comparaison moyennée peut être réalisée sur des fenêtres glissantes dans le temps afin d'éviter les fausses alertes liées à des perturbations locales et fugaces (rafales de vent, décrochage de l'écoulement en bord des lèvres de la nacelle), d'autant plus si la première pression mesurée est un pression totale.

Selon l'invention, par rapport au sens du flux d'air dans la turbomachine, la première pression ou température d'une turbomachine est mesurée en amont d'un compresseur basse pression de la turbomachine, et la seconde pression ou température est mesurée en aval dudit compresseur basse pression, le compresseur basse pression étant couplé audit arbre basse pression.

Dans un autre objet de l'invention, il est proposé un aéronef comprenant au moins deux turbomachines disposées de part et d'autre d'un axe principal de l'aéronef s'étendant entre un nez de l'aéronef et une queue de l'aéronef, lesdites turbomachines comportant chacune un arbre basse pression et un ensemble d'au moins trois capteurs de régulation du fonctionnement de la turbomachine, un premier capteur de l'ensemble étant configuré pour mesurer le régime de l'arbre basse pression, un deuxième capteur de l'ensemble étant configuré pour mesurer une pression ou une température à une première localisation sur la turbomachine, et un troisième capteur de l'ensemble étant configuré pour mesurer une pression ou une température à une seconde localisation sur la turbomachine.

Selon une caractéristique générale de l'aéronef selon l'invention, l'aéronef comprend un système de détection d'un vent de travers pour une turbomachine d'aéronef, le système comportant :
- des moyens d'acquisition des données desdits ensembles d'au moins trois capteurs,
- des moyens de normalisation configurés pour normaliser ladite première pression ou température par rapport au régime de l'arbre basse pression et à la seconde pression ou température,

des moyens de comparaison configurés pour comparer la première pression ou température normalisée d'une turbomachine à la première pression ou température normalisée de ladite au moins une autre turbomachine de l'aéronef, et
des moyens de détection configurés pour générer un signal de présence d'un vent de travers à partir du signal délivré par les moyens de comparaison.

Les capteurs de température peuvent être choisis parmi différents types tels que des capteurs à thermocouples ou encore des capteurs de température à résistance (RTD), et les capteurs de pression peuvent être choisis parmi différents types tels que les jauges de déformation, les jauges piézo-électriques, les capteurs de pression à semi-conducteur, et d'autres. Les capteurs de pression peuvent être des capteurs mesurant une pression statique et/ou une pression totale. En outre, les deux capteurs de pressions peuvent être intégrés au sein d'un boîtier d'acquisition auquel des canalisations conduisent les prélèvements de pression depuis les points d'intérêt.

Selon un premier aspect de l'aéronef, les turbomachines peuvent être symétriques par rapport à l'axe principal de la turbomachine.

Selon un deuxième aspect de l'aéronef, ledit deuxième capteur et ledit troisième capteur de l'ensemble mesure une même grandeur thermodynamique parmi la pression ou la température.

Selon un troisième aspect de l'aéronef, les capteurs de régulation du fonctionnement de la turbomachine de chaque ensemble sont des capteurs du système électronique de commande des turbomachines de l'aéronef.

Le procédé repose sur l'acquisition et le traitement des données des capteurs de régulation de chaque moteur d'un tel aéronef. On appel capteurs de régulation les capteurs intervenant dans le contrôle de la poussée et le maintien du bon fonctionnement de la turbomachine : ils font partie, avec le calculateur de contrôle moteur, du système électronique de commande aussi connu sous la dénomination « FADEC » qui signifie en anglais « Full Authority Digital Engine Control ».

Selon l'invention, le deuxième capteur est monté en amont d'une soufflante de la turbomachine à laquelle le deuxième capteur est associé, et le troisième capteur est monté en aval de la soufflante de la turbomachine à laquelle le troisième capteur est associé, la soufflante étant couplée audit arbre basse pression.

### Brève description des dessins

[Fig. 1] La figure 1 représente schématiquement un aéronef.
[Fig. 2] La figure 2 représente schématiquement une vue en coupe d'une turbomachine de l'aéronef de la figure 1.
[Fig. 3] La figure 3 présente un logigramme d'un procédé de détection de la présence d'un vent de travers pour une turbomachine de l'aéronef de la figure 1.
[Fig. 4] La figure 4 présente schématiquement un système de détection de la présence d'un vent de travers pour une turbomachine 5 d'un aéronef de la figure 1.

### Description des modes de réalisation

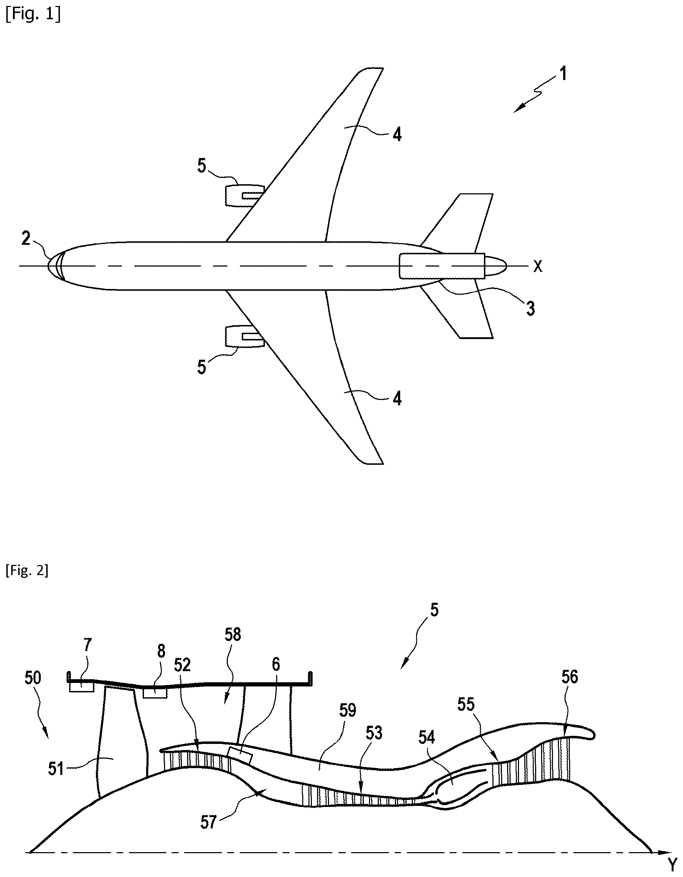

Sur la figure 1 est représenté une vue schématique d'un aéronef 1 comprenant un nez 2, une queue 3, un axe principal X s'étendant entre le nez 2 et la queue 3 de l'aéronef 1, deux ailes 4 s'étendant chacune d'un côté de l'axe principal X, et deux turbomachines 5 disposées symétriquement par rapport à l'axe principal X, chaque turbomachine 5 étant montée sur une aile 4 distincte.

Sur la figure 2, est représenté schématiquement une vue en coupe d'une moitié supérieure d'une turbomachine 5 de l'aéronef 1.

Dans l'exemple illustré sur la figure 2, chaque turbomachine 5 de l'aéronef 1 est une turbomachine à double corps et à double flux. La turbomachine 5 comprend, d'amont en aval selon un axe Y (parallèle à l'axe principal X) de la turbomachine 1 dans le sens d'écoulement des gaz, une entrée d'air 50, une soufflante 51, un compresseur basse pression (ou BP) 52, un compresseur haute pression (ou HP) 53, une chambre de combustion 54, une turbine haute pression 55, et une turbine basse pression 56.

La turbomachine 5 comprend en outre une veine primaire 57 et une veine secondaire 58 séparées par un carter intermédiaire 59. La veine primaire 57 s'étend en aval de la soufflante 51 et est délimitée radialement par le carter intermédiaire 59. La veine primaire 57 comprend le compresseur basse pression 52, le compresseur haute pression 53, la chambre de combustion 54 et les turbines haute et basse pression 55 et 56. La veine secondaire 58 s'étend autour de la veine primaire 57, également en aval de la soufflante 51. La veine secondaire 58 s'étend radialement entre le carter intermédiaire 59 et un carter externe s'étendant autour du carter intermédiaire 59.

La turbomachine 5 comprend en outre un ensemble de trois capteurs de régulation du fonctionnement de la turbomachine 5, l'ensemble comportant un premier capteur 6 configuré pour mesurer le régime de l'arbre basse pression, un deuxième capteur 7 configuré pour mesurer une première pression à hauteur de l'entrée d'air 50 de la turbomachine 5, c'est-à-dire en amont de la soufflante 51, et un troisième capteur 8 configuré pour mesurer une seconde pression en aval de la soufflante 51 la turbomachine 5.

Les capteurs de pression sont des jauges à déformation, ou des jauges piézo-électriques, ou les capteurs de pression à semi-conducteur.

Les premiers, deuxièmes et troisièmes capteurs de chaque turbomachine 5 sont des capteurs intégrés au système électronique de commande aussi connu sous la dénomination « FADEC ».

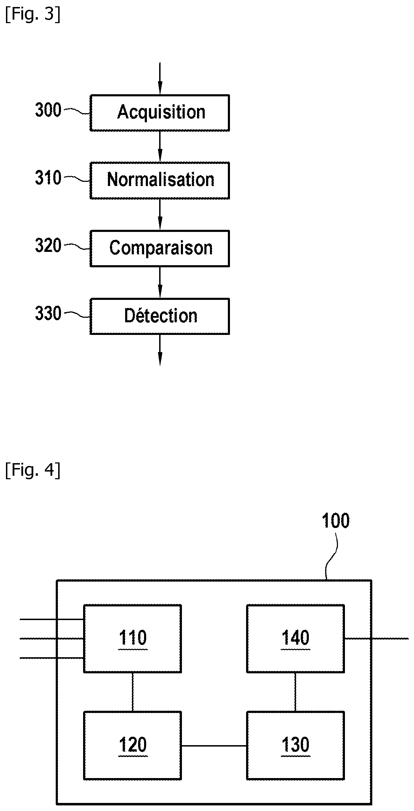

Sur la figure 3 est représenté un logigramme d'un procédé de détection de la présence d'un vent de travers pour une turbomachine 5 d'un aéronef 1.

Le procédé comprend tout d'abord une première étape 300 d'acquisition des données issues des trois capteurs 6, 7 et 8 pour chacune des deux turbomachines 5 de l'aéronef.

Le procédé comprend, ensuite, une deuxième étape 310 de normalisation de la première pression pour chaque turbomachine 5. Cette étape 310 de normalisation consiste à normaliser pour chaque turbomachine 5 la première pression mesurée par le deuxième capteur 7, c'est-à-dire la pression en amont de la soufflante 51, par rapport au régime de l'arbre basse pression mesuré par le premier capteur 6et à la seconde pression mesurée par le troisième capteur 8.

Dans une troisième étape 320, le procédé réalise une comparaison de la première pression ainsi normalisée d'une turbomachine 5 de l'aéronef 1 par rapport la première pression normalisée de l'autre turbomachine 5 de l'aéronef 1. La comparaison peut être réalisée par soustraction des valeurs ou par détermination d'un rapport entre les deux valeurs.

Dans une quatrième étape 330, le procédé comprend une étape de détection de la présence d'un vent de travers à partir du résultat de la comparaison. L'étape de détection comprend notamment une comparaison du résultat de la soustraction ou de la division calculée à l'étape précédente 320 à un seuil de détection pour déterminer s'il y a ou non présence d'un vent de travers.

L'étape de détection permet en outre, à partir du signe du résultat de la soustraction ou à partir de la valeur du rapport calculé, de déterminer la direction azimutale du vent de travers détecté.

L'étape de détection peut être réalisée à partir d'un résultat de comparaison moyenné. Pour cela, on peut réaliser une moyenne des résultats des comparaisons sur une fenêtre temporelle d'environ 30 secondes par exemple. Ou bien, on peut réaliser une comparaison moyennée en réalisant tout d'abord une moyenne des données acquises par les capteurs et en comparant les moyennes ainsi obtenues après normalisation.

Sur la figure 4 est représenté schématiquement un système 100 de détection d'un vent de travers pour une turbomachine 5 d'aéronef 1. Le système 100 comporte des moyens 110 d'acquisition des données des trois capteurs, des moyens de normalisation 120 configurés pour normaliser ladite première pression par rapport au régime de l'arbre basse pression et à la seconde pression ou température, des moyens de comparaison 130 configurés pour comparer la première pression normalisée d'une turbomachine à la première pression normalisée de l'autre turbomachine 5, et des moyens 140 de détection configurés pour générer un signal de présence d'un vent de travers à partir du signal délivré par les moyens de comparaison.

L'invention permet ainsi de détecter des conditions de vent de travers pour des turbomachines d'un aéronef en l'absence de données issues de station au sol ou de données satellitaires ou de données de l'avionique.

## Revendications

1. Procédé de détection de la présence d'un vent de travers pour une turbomachine d'un aéronef, l'aéronef comportant au moins deux turbomachines disposées de part et d'autre d'un axe principal de l'aéronef s'étendant entre un nez de l'aéronef et une queue de l'aéronef, lesdites turbomachines comportant chacune un arbre basse pression, un compresseur basse pression couplé audit arbre basse pression, et un ensemble d'au moins trois capteurs de régulation du fonctionnement de la turbomachine, un premier capteur de l'ensemble étant configuré pour mesurer le régime de l'arbre basse pression, un deuxième capteur de l'ensemble étant configuré pour mesurer une première pression ou température en amont du compresseur basse pression de la turbomachine par rapport au sens du flux d'air dans la turbomachine , et un troisième capteur de l'ensemble étant configuré pour mesurer une seconde pression ou température en aval dudit compresseur basse pression par rapport au sens du flux d'air dans la turbomachine,
le procédé comprenant les étapes suivantes :
- pour chaque turbomachine, une acquisition (300) des données de l'ensemble d'au moins trois capteurs,
- pour chaque turbomachine, une normalisation (310) de ladite première pression ou température par rapport au régime de l'arbre basse pression et à la seconde pression ou température,
- une comparaison (320) de la première pression ou température normalisée d'une turbomachine à la première pression ou température normalisée de ladite au moins une autre turbomachine de l'aéronef,
- une détection (330) de la présence d'un vent de travers à partir du résultat de la comparaison.

2. Procédé de détection de la présence d'un vent de travers selon la revendication 1, comprenant en outre une détermination de la direction azimutale du vent de travers détecté à partir du résultat de la comparaison.

3. Procédé de détection de la présence d'un vent de travers selon l'une des revendications 1 ou 2, comprenant en outre une détermination de la vitesse du vent de travers détecté.

4. Procédé de détection de la présence d'un vent de travers selon l'une des revendications 1 à 3, dans lequel l'étape de détection (330) est réalisée à partir d'un résultat moyenné de l'étape de comparaison, le résultat moyenné étant obtenu à partir d'une comparaison d'une moyenne de première pression ou température normalisée à une moyenne de première pression ou température normalisée de ladite au moins une autre turbomachine de l'aéronef, les moyennes étant réalisée à partir des mesures acquises pendant une même fenêtre temporelle, ou bien à partir d'une moyenne des comparaisons réalisées à partir des résultats des comparaisons déterminées pendant une fenêtre temporelle.

5. Aéronef (1) comprenant au moins deux turbomachines (5) disposées de part et d'autre d'un axe principal (X) de l'aéronef (1) s'étendant entre un nez (2) de l'aéronef (1) et une queue (3) de l'aéronef (1), lesdites turbomachines (5) comportant chacune un arbre basse pression, une soufflante (51) couplée à l'arbre basse pression, et un ensemble d'au moins trois capteurs de régulation (6, 7, 8) du fonctionnement de la turbomachine (5), un premier capteur (6) de l'ensemble étant configuré pour mesurer le régime de l'arbre basse pression, un deuxième capteur (7) de l'ensemble monté en amont de la soufflante (51) de la turbomachine (5) à laquelle le deuxième capteur (7) est associé, le deuxième capteur (7) étant configuré pour mesurer une pression ou une température, et un troisième capteur (8) de l'ensemble monté en aval de la soufflante (51) de la turbomachine à laquelle le troisième capteur (8) est associé, le troisième capteur (8) étant configuré pour mesurer une pression ou une température,
**caractérisé en ce qu'**il comprend un système de détection (100) d'un vent de travers pour une turbomachine (5) d'aéronef (1), le système (100) comportant :
- des moyens d'acquisition (110) des données desdits ensembles d'au moins trois capteurs (6, 7, 8),
- des moyens de normalisation (120) configurés pour normaliser ladite première pression ou température par rapport au régime de l'arbre basse pression et à la seconde pression ou température,
- des moyens de comparaison (130) configurés pour comparer la première pression ou température normalisée d'une turbomachine (5) à la première pression ou température normalisée de ladite au moins une autre turbomachine (5) de l'aéronef (1), et
- des moyens de détection (140) configurés pour générer un signal de présence d'un vent de travers à partir du signal délivré par les moyens de comparaison (130).

6. Aéronef (1) selon la revendication 5, dans lequel les turbomachines sont symétriques par rapport à l'axe principal (X) l'aéronef.

7. Aéronef (1) selon l'une des revendications 5 ou 6, dans lequel ledit deuxième capteur (7) et ledit troisième capteur (8) de l'ensemble mesure une même grandeur thermodynamique parmi la pression ou la température.

8. Aéronef (1) selon l'une des revendications 5 à 7, dans lequel les capteurs de régulation (6, 7, 8) du fonctionnement de la turbomachine (5) de chaque ensemble sont des capteurs du système électronique de commande des turbomachines (5) de l'aéronef (1).

## Patentansprüche

1. Verfahren zur Erkennung des Vorhandenseins eines Seitenwinds für eine Turbomaschine eines Luftfahrzeugs, wobei das Luftfahrzeug zumindest zwei Turbomaschinen beinhaltet, die auf beiden Seiten einer Hauptachse des Luftfahrzeugs angeordnet sind, die sich zwischen einer Nase des Luftfahrzeugs und einem Heck des Luftfahrzeugs erstreckt, wobei die Turbomaschinen jeweils eine Niederdruckwelle, einen Niederdruckkompressor, der mit der Niederdruckwelle gekoppelt ist, und eine Anordnung von zumindest drei Sensoren zur Regelung der Funktion der Turbomaschine beinhalten, wobei ein erster Sensor der Anordnung dazu ausgestaltet ist, die Drehzahl der Niederdruckwelle zu messen, ein zweiter Sensor der Anordnung dazu ausgestaltet ist, einen ersten Druck oder eine erste Temperatur stromaufwärts des Niederdruckkompressors der Turbomaschine in Bezug auf die Richtung der Luftströmung in der Turbomaschine zu messen, und ein dritter Sensor der Anordnung dazu ausgestaltet ist, einen zweiten Druck oder eine zweite Temperatur stromabwärts des Niederdruckkompressors in Bezug auf die Richtung der Luftströmung in der Turbomaschine zu messen,
wobei das Verfahren die folgenden Schritte umfasst:
- eine Erfassung (300) der Daten der Anordnung von zumindest drei Sensoren für jede Turbomaschine,
- eine Normalisierung (310) des ersten Drucks oder der ersten Temperatur in Bezug auf die Drehzahl der Niederdruckwelle und auf den zweiten Druck oder die zweite Temperatur für jede Turbomaschine,
- einen Vergleich (320) des normalisierten ersten Drucks oder der normalisierten ersten Temperatur einer Turbomaschine mit dem normalisierten ersten Druck oder der normalisierten ersten Temperatur der zumindest einen weiteren Turbomaschine des Luftfahrzeugs,
- eine Erkennung (330) des Vorhandenseins eines Seitenwinds ausgehend von dem Resultat des Vergleichs.

2. Verfahren zur Erkennung des Vorhandenseins eines Seitenwinds nach Anspruch 1, ferner umfassend eine Bestimmung der azimutalen Richtung des ausgehend von dem Resultat des Vergleichs erkannten Seitenwinds.

3. Verfahren zur Erkennung des Vorhandenseins eines Seitenwinds nach einem der Ansprüche 1 oder 2, ferner umfassend eine Bestimmung der Geschwindigkeit des erkannten Seitenwinds.

4. Verfahren zur Erkennung des Vorhandenseins eines Seitenwinds nach einem der Ansprüche 1 bis 3, wobei der Erkennungsschritt (330) ausgehend von einem gemittelten Resultat des Vergleichsschritts verwirklicht wird, wobei das gemittelte Resultat ausgehend von einem Vergleich eines Mittelwerts des normalisierten ersten Drucks oder der normalisierten ersten Temperatur mit einem Mittelwert des normalisierten ersten Drucks oder der normalisierten ersten Temperatur der zumindest einen weiteren Turbomaschine des Luftfahrzeugs erhalten wird, wobei die Mittelwerte ausgehend von Messungen verwirklicht werden, die während einens selben Zeitfensters erfasst wurden, oder auch ausgehend von einem Mittelwert der Vergleiche, die ausgehend von Resultaten von Vergleichen verwirklicht wurden, die während eines Zeitfensters bestimmt wurden.

5. Luftfahrzeug (1) umfassend zumindest zwei Turbomaschinen (5), die auf beiden Seiten einer Hauptachse (X) des Luftfahrzeugs (1) angeordnet sind, die sich zwischen einer Nase (2) des Luftfahrzeugs (1) und einem Heck (3) des Luftfahrzeugs (1) erstreckt, wobei die Turbomaschinen (5) jeweils eine Niederdruckwelle, ein Gebläse (51), das mit der Niederdruckwelle gekoppelt ist, und eine Anordnung von zumindest drei Sensoren (6, 7, 8) zur Regelung der Funktion der Turbomaschine (5) beinhalten, wobei ein erster Sensor (6) der Anordnung dazu ausgestaltet ist, die Drehzahl der Niederdruckwelle zu messen, ein zweiter Sensor (7) der Anordnung stromaufwärts des Gebläses (51) der Turbomaschine (5), welcher der zweite Sensor (7) zugeordnet ist, montiert ist, wobei der zweite Sensor (7) dazu ausgestaltet ist, einen Druck oder eine Temperatur zu messen, und ein dritter Sensor (8) der Anordnung stromabwärts des Gebläses (51) der Turbomaschine, welcher der dritte Sensor (8) zugeordnet ist, montiert ist, wobei der dritte Sensor (8) dazu ausgestaltet ist, einen Druck oder eine Temperatur zu messen,
**dadurch gekennzeichnet, dass** es ein System zur Erkennung (100) eines Seitenwinds für eine Turbomaschine (5) des Luftfahrzeugs (1) umfasst, wobei das System (100) beinhaltet:
- Mittel zur Erfassung (110) der Daten der Anordnungen von zumindest drei Sensoren (6, 7, 8),
- Mittel zur Normalisierung (120), die dazu ausgestaltet sind, den ersten Druck oder die erste Temperatur in Bezug auf die Drehzahl der Niederdruckwelle und auf den zweiten Druck oder die zweite Temperatur zu normalisieren,
- Mittel zum Vergleich (130), die dazu ausgestaltet sind, den normalisierten ersten Druck oder die normalisierte erste Temperatur einer Turbomaschine (5) mit dem normalisierten ersten Druck oder der normalisierten ersten Temperatur der zumindest einen weiteren Turbomaschine (5) des Luftfahrzeugs (1) zu vergleichen, und
- Mittel zur Erkennung (140), die dazu ausgestaltet sind, ein Signal für das Vorhandensein eines Seitenwinds ausgehend von dem Signal zu erzeugen, das von den Mitteln zum Vergleich (130) ausgegeben wird.

6. Luftfahrzeug (1) nach Anspruch 5, wobei die Turbomaschinen in Bezug auf eine Hauptachse (X) des Luftfahrzeugs symmetrisch sind.

7. Luftfahrzeug (1) nach einem der Ansprüche 5 oder 6, wobei der zweite Sensor (7) und der dritte Sensor (8) der Anordnung eine selbe thermodynamische Größe ausgewählt aus dem Druck oder der Temperatur messen.

8. Luftfahrzeug (1) nach einem der Ansprüche 5 bis 7, wobei die Sensoren (6, 7, 8) zur Regelung der Funktion der Turbomaschine (5) einer jeden Anordnung Sensoren des elektronischen Steuersystems der Turbomaschinen (5) des Luftfahrzeugs (1) sind.

## Claims

1. A method for detecting the presence of a crosswind for a turbomachine of an aircraft, the aircraft including at least two turbomachines disposed on either side of a main axis of the aircraft extending between a nose of the aircraft and a tail of the aircraft, said turbomachines each including a low-pressure shaft, a low-pressure compressor coupled to said low-pressure shaft, and a set of at least three sensors for controlling the operation of the turbomachine, a first sensor of the set being configured to measure the rating of the low-pressure shaft, a second sensor of the set being configured to measure a first pressure or temperature upstream of the low-pressure compressor of the turbomachine with respect to the direction of the air flow in the turbomachine, and a third sensor of the set being configured to measure a second pressure or temperature downstream of said low-pressure compressor with respect to the direction of the air flow in the turbomachine, the method comprising the following steps:
- for each turbomachine, acquiring (300) the data of the set of at least three sensors,
- for each turbomachine, normalizing (310) said first pressure or temperature of a turbomachine with respect to the rating of the low-pressure shaft and with respect to the second pressure or temperature,
- comparing (320) the normalized first pressure or temperature of a turbomachine with the normalized first pressure or temperature of said at least one other turbomachine of the aircraft,
- detecting (330) the presence of a crosswind based on the result of the comparison.

2. The method for detecting the presence of a crosswind as claimed in claim 1, further comprising the determining of the azimuthal direction of the detected crosswind based on the result of the comparison.

3. The method for detecting the presence of a crosswind as claimed in one of claims 1 or 2, further comprising the determining of the speed of the detected crosswind.

4. The method for detecting the presence of a crosswind as claimed in one of claims 1 to 3, wherein the detecting step (330) is done based on an averaged result of the comparing step, the averaged result being obtained based on a comparison of an average normalized first pressure or temperature with an averaged normalized first pressure or temperature of said at least one other turbomachine of the aircraft, the averages being taken based on the measurements acquired during one and the same time window, or else based on an average of the comparisons made based on the results of the comparisons determined during a time window.

5. An aircraft (1) comprising at least two turbomachines (5) disposed on either side of a main axis (X) of the aircraft (1) extending between a nose (2) of the aircraft (1) and a tail (3) of the aircraft (1), said turbomachines (5) each including a low-pressure shaft, a fan (51) coupled to the low-pressure shaft, and a set of at least three sensors (6, 7, 8) for controlling the operation of the turbomachine (5), a first sensor (6) of the set being configured to measure the rating of the low-pressure shaft, a second sensor (7) of the set mounted upstream of the fan (51) of the turbomachine (5) with which the second sensor (7) is associated, the second sensor (7) being configured to measure a pressure or a temperature, and a third sensor (8) of the set mounted downstream of the fan (51) of the turbomachine with which the third sensor (8) is associated, the third sensor (8) being configured to measure a pressure or a temperature,
**characterized in that** it comprises a system (100) for detecting a crosswind for an aircraft (1) turbomachine (5), the system (100) including:
- means (110) for acquiring data from said sets of at least three sensors (6, 7, 8),
- normalizing means (120) configured to normalize said first pressure or temperature par rapport with respect to the rating of the low-pressure shaft and with respect to the second pressure or temperature,
- comparing means (130) configured to compare the normalized first pressure or temperature of a turbomachine (5) with the normalized first pressure or temperature of said at least one other turbomachine (5) of the aircraft (1), and
- detecting means (140) configured to generate a signal of the presence of a crosswind based on the signal delivered by the comparing means (130).

6. The aircraft (1) as claimed in claim 5, wherein the turbomachines are symmetrical with respect to the main axis (X) of the aircraft.

7. The aircraft (1) as claimed in one of claims 5 or 6, wherein said second sensor (7) and said third sensor (8) of the set measure one and the same thermodynamic quantity from among the pressure or the temperature.

8. The aircraft (1) as claimed in one of claims 5 to 7, wherein the sensors (6, 7, 8) for controlling the operation of the turbomachine (5) of each set are sensors of the electronic control system of the turbomachines (5) of the aircraft (1).
